(19) Europäisches Patentamt
European Patent Office
Office européen des brevets

(11) **EP 4 380 783 B1**

(12) **EUROPEAN PATENT SPECIFICATION**

(45) Date of publication and mention
of the grant of the patent:
**06.08.2025  Bulletin 2025/32**

(21) Application number: **21962727.0**

(22) Date of filing: **29.10.2021**

(51) International Patent Classification (IPC):
**B29C 64/393** (2017.01)   **B33Y 50/02** (2015.01)
**B33Y 80/00** (2015.01)   **B22F 5/10** (2006.01)
**B22F 5/00** (2006.01)   **F16F 3/04** (2006.01)
**F16F 15/067** (2006.01)   **F16F 1/04** (2006.01)
**A43B 13/18** (2006.01)

(52) Cooperative Patent Classification (CPC):
**F16F 1/046; F16F 3/04; F16F 15/067;** A43B 13/181;
B22F 5/10; B22F 10/00; B22F 2005/004;
B29C 64/386; B33Y 50/00; B33Y 80/00;
F16F 2234/06

(86) International application number:
**PCT/US2021/057422**

(87) International publication number:
**WO 2023/075797 (04.05.2023 Gazette 2023/18)**

(54) **FLEXIBLE STRUCTURES**

FLEXIBLE STRUKTUREN

STRUCTURES FLEXIBLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.06.2024  Bulletin 2024/24**

(73) Proprietor: **Peridot Print LLC
Palo Alto, CA 94304 (US)**

(72) Inventors:
• **HIERRO DOMENECH, Lluis**
**08174 Sant Cugat del Valles (ES)**
• **DOMINGUEZ MANCHADO, Cristina**
**08174 Sant Cugat del Valles (ES)**
• **POLL CRESPO, Bernat**
**08174 Sant Cugat del Valles (ES)**
• **FONT CALAFELL, Davinia**
**08174 Sant Cugat del Valles (ES)**
• **CASELLAS LOPEZ, Jordi**
**08174 Sant Cugat del Valles (ES)**
• **ARCAS MANRIQUE, Jordi**
**08174 Sant Cugat del Valles (ES)**

(74) Representative: **Haseltine Lake Kempner LLP
One Portwall Square
Portwall Lane
Bristol BS1 6BH (GB)**

(56) References cited:
**US-A- 2 562 099       US-A1- 2014 037 873
US-A1- 2018 368 518   US-A1- 2019 358 894
US-A1- 2020 307 075   US-A1- 2021 145 613**

## Description

### BACKGROUND

Flexible structures have many uses, for example in providing cushioning and support. Flexible structures may be incorporated into a number of objects, and may have properties tailored to a given purpose.

Additive manufacturing techniques may generate a three-dimensional object through the solidification of a build material, for example on a layer-by-layer basis. In examples of such techniques, build material may be supplied in a layer-wise manner and the solidification method may include heating the layers of build material to cause melting in selected regions. In other techniques, chemical or other solidification methods may be used. US 2018/0368518 A1 describes cushioning for a sole structure of performance footwear.

### SUMMARY

The scope of the invention is defined by the appended claims.

### BRIEF DESCRIPTION OF DRAWINGS

Non-limiting examples will now be described with reference to the accompanying drawings, in which:

> Figure 1A and 1B are, respectively, a top view and a side view of an example of a flexible structure and Figure 1C is an example of a spring unit of this flexible structure;
> Figure 2A and 2B are respectively, a top view and a side view of another example of a flexible structure and Figure 2C is an example of a spring unit of this flexible structure;
> Figure 3A and 3B are respectively, a top view and a side view of another example of a flexible structure and Figure 3C is an example of a spring unit of this flexible structure;
> Figure 4 is an example of a method for determining a model for generating a flexible structure;
> Figure 5 is a flowchart of an example method for generating objects in additive manufacturing;
> Figure 6 is an example of an object including a flexible structure as a portion thereof; and
> Figure 7 is a simplified schematic drawing of an example machine readable medium associated with a processor.

### DETAILED DESCRIPTION

Flexible structures, in particular small-scale flexible structures, may have a number of uses. In some examples, such structures may be tailored to particular use cases. For example, such structures may be intended to provide a predetermined amount of cushioning and/or support.

Additive manufacturing techniques may generate a three-dimensional object through the solidification of a build material. In some examples, the build material is a powder-like granular material, e.g., a plastic, ceramic or metal powder, and the properties of generated objects may depend on the type of build material and the type of solidification mechanism used. Build material may be deposited, for example on a print bed and processed layer by layer, for example within a fabrication chamber. According to one example, a suitable build material may be a Nylon, such as PA12 or PA11 material, a Thermoplastic Polyurethane (TPU) material, Thermoplastic Polyamide material (TPA), Polypropylene (PP) and the like.

In some examples, selective solidification is achieved through directional application of energy, for example using a laser or electron beam which results in solidification of build material where the directional energy is applied. In other examples, at least one print agent may be selectively applied to the build material, and may be liquid when applied. For example, a fusing agent (also termed a 'coalescence agent' or 'coalescing agent') may be selectively distributed onto portions of a layer of build material in a pattern derived from data representing a slice of a three-dimensional object to be generated (which may for example be determined from structural design data). The fusing agent may have a composition which absorbs energy such that, when energy (for example, heat) is applied to the layer, the build material to which it has been applied heats up, coalesces and solidifies, upon cooling, to form a slice of the three-dimensional object in accordance with the pattern. In other examples, coalescence may be achieved in some other manner.

A suitable fusing agent may be an ink-type formulation comprising carbon black. A fusing agent may comprise any or any combination of an infra-red light absorber, a near infra-red light absorber, a visible light absorber and a UV light absorber. Examples of fusing agents comprising visible light absorption enhancers are dye based colored ink and pigment based colored ink.

In addition to a fusing agent, in some examples, a print agent may comprise a coalescence modifier agent, which acts to modify the effects of a fusing agent for example by reducing or increasing coalescence or to assist in producing a particular finish or appearance to an object, and such agents may therefore be termed detailing agents. In some examples, detailing agent may be used near edge surfaces of an object being printed to reduce coalescence, and to assist with controlling object dimensions by preventing surrounding build material from fusing. Other examples of additive manufacturing comprise fused deposit modelling, selective laser sintering and stereolithography.

As noted above, additive manufacturing systems may generate objects based on structural design data. This may involve a designer determining a three-dimensional model of an object to be generated, for example using a computer aided design (CAD) application. The model may define the solid portions of the object. To generate a three-dimensional object from the model using an additive manufacturing system, the model data can be processed to define slices or parallel planes of the model. Each slice may define a portion of a respective layer of build material that is to be solidified or caused to coalesce by the additive manufacturing system.

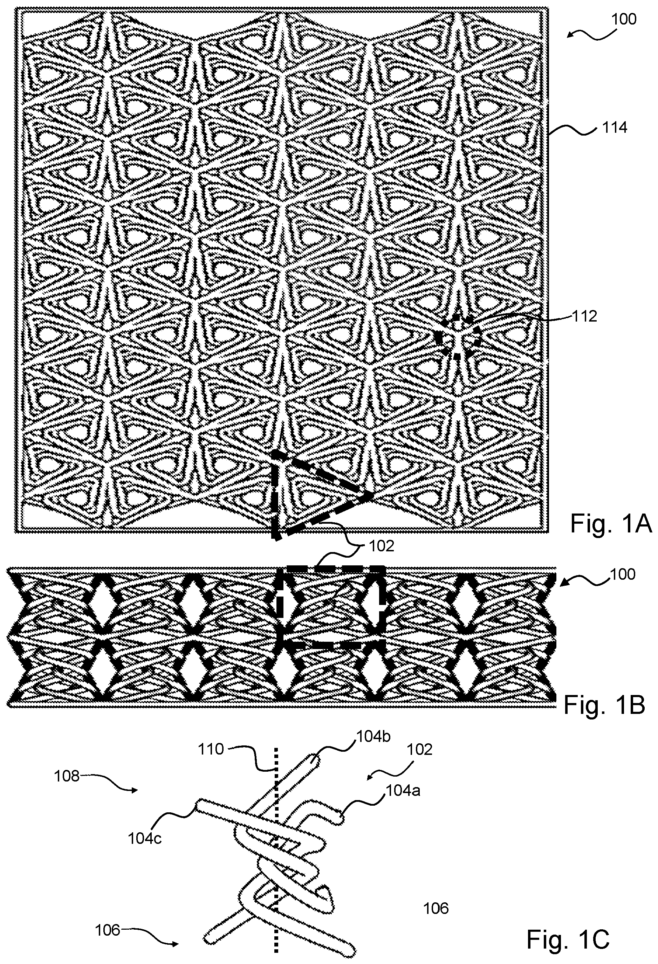

Figures 1A-B, 2A-B and 3A-B show examples of flexible structures, which structures may also be referred to as flexible fabrics herein.

Figure 1A-B shows a first example of a flexible structure 100 which is shown in a first view, referred to herein as a top view, in Figure 1A and a second view, referred to herein as a side view, in Figure 1B. The flexible structure 100 is made up of a plurality of interlinked/adjoining spring units 102. An individual spring unit 102 is shown in perspective view in Figure 1C and the top view and side view of a single spring unit 102 is indicated respectively in Figure 1A and Figure 1B with a dotted frame.

In this example the spring unit 102 comprises three coaxial coiled springs 104a, 104b, 104c, which are also referred to herein as spring elements. "Coaxial" as used herein means having a common axis, although it may not be a central axis for all the springs 104. Each spring 104 in this example comprises a spiral form, and the springs 104 may be generated in situ within the flexible structure 100 using additive manufacturing. In an example, a spring unit 102 may comprise dimensions on the order of millimeters, for example comprising a height, width and depth of around between 3 and 10mm, or between 3 and 6mm. The springs 104 extend from a lower end 106 to an upper end 108 around a common axis 110. In this example, the axis 110 is a central axis to all the springs 104 of the spring unit 102, but this need not be the case in all examples. Each individual spring 104 may, for example, comprise a 'wire' or wire-like element (which may be formed in a plastic material) with a diameter of around 0.3 to 1mm, and in a particular example comprises a diameter of less than 1mm, for example a diameter around 0.5mm. The springs 104 may be separated from one another with a clearance of less than 1mm, and in some examples with a minimum separation along their length of around 0.4mm.

In some examples, the structure 100 is generated by additive manufacturing. There may be a minimum feature size (e.g., spring diameter) and/or separation which can be generated by a given additive manufacturing apparatus, for example a finite resolution in relation to the accuracy with which build material and/or print agents may be placed or with which additive manufacturing apparatus can be controlled. Some techniques allow for accurate placement of print agent on a build material, for example by using print heads operated according to inkjet principles of two-dimensional printing to apply print agents, which in some examples may be controlled to apply print agents with a resolution of around 600 dpi or 1200 dpi. At 600dpi, this theoretically means that features as small as 42 microns could be generated, depending on the thickness of the layers used to generate the object. However, as noted above, energy may be applied (for example using heat lamps) to cause the build materials to fuse, and such small areas of agent-treated build material may not absorb enough energy to reach the fusing temperature of the build material, wherein the fusing temperature may be a temperature at which build material is at least substantially entirely caused to melt such that it will coalesce and fuse to form, upon cooling, a solid portion of the object. Thus, in practice, in some examples, the minimum 'printable' feature size may be determined not by the resolution of the object generation apparatus but by the temperature that such a feature can reach during the fusing process. The resolution may also vary with build material type, with some build materials (e.g., at the time of writing, TPU) being associated with a lower resolution than others (e.g., PA12 and PA11).

PA11 may be particularly suited to use in generating small scale flexible structures because of the ability to form small features.

Moreover, the fusing process should be controlled such that features which are intended to be separate should remain so, which in heat based additive manufacturing processes may be despite a tendency for heat to spread throughout the build material. In some examples, detailing agent may be used to control the diffusion of heat through the build material. As will be discussed in greater detail below, where elements are to be generated in close proximity to one another, a strategy for applying print agent, in particular detailing or cooling agent, may be used which is different from that used when generating larger elements and/or elements which are further apart from one another. In some examples, more detailing agent may be applied between small features which are close together than in other regions of a build operation.

For example, when considering use of fusing agent such as those described above, a particular apparatus may be able to generate a spring 104 with a minimum diameter of, say, around 0.3mm or 0.4mm and the individual springs 104 may be designed so as to have a minimum separation of around 0.3mm or 0.4mm along their lengths, while avoiding such elements fusing together. This may be achieved by selecting an amount (e.g., a volume) of fusing agent and/or detailing agent to apply to each respective region of build material to provide an adequate temperature differential between regions of the build material in a given layer which are intended to fuse and regions of the build material which are intended to remain unfused.

To form the flexible structure 100, the upper end of a first spring 104 of a first spring unit 102 is continuously formed with the upper end of a spring element 104 of at least one other spring unit 102. Moreover, the lower end of the first spring 104 is continuously formed with the lower end of a spring 104 of at least one other spring unit 102. In other words, each spring 104 of a spring unit 102 comprises a first end and second end, and an end of one spring 104 adjoins (or continues) an end of a spring of an adjacent spring unit 102.

A circular frame 112 is shown in Figure 1A to highlight the point at which the springs 104 join one another such that the springs 104 are formed continuously with each other. In this example, six springs 104 merge to form a single meeting point within the frame 110, and the spring units 102 are arranged in a generally hexagonal regular grid, each hexagon made up of six spring units 102. A 'regular grid' may be any repeating arrangement of spring units 102 in a structure 100.

In this example, the flexible structure 100 is made up of two layers of spring units 102, stacked on top of each other, although other flexible structures 100 may have a single layer or additional layers. Within each layer, each spring unit 102 (other than those at an edge of the flexible structure 100) is directly connected to five other spring units 102 at each end of each spring 104 to form the hexagonal layout.

Directly connecting the springs 104/spring units 102 in this way allows the use of raw material to be minimised while still providing a continuous structure. Such a form may be readily provided using additive manufacturing techniques, in which the springs may be formed layer by layer. Thus, in examples, adjacent spring units 102 are formed at the same time, for example from the lower end 106 to the upper end 108, for example by treating layers of build material with print agents and/or directed energy.

Moreover, in this example, the spring units 102 are tapered, i.e., the springs 104 are formed such that the spring unit 102 has a varying circumference between the lower end 106 and the upper end 108. In other examples, this need not be the case and the spring unit 102 may have a constant diameter. While in this example, the spring unit 102 is 'waisted' (i.e., has a diameter which tapers to a waist and then expands again), in another example the spring unit 102 may taper in one direction, such that the lower end 106 has a smaller diameter than the upper end 108 or vice versa. It may also be noted that, while in this example, the waist is provided in the centre of the spring unit 102, this need not be the case in all examples.

Providing such a tapering, or waisted, structure may allow for greater vertical compression, assuming the vertical axis runs up the page in the view shown in Figure 1B. This may be because the coils of the spring may not interfere with one another as the flexible structure 100 is compressed. Indeed, in some examples, the spring units are designed such that the coils are displaced from one another such that, with sufficient compressive force, the spring unit 102 may be flattened to have a first layer of coils arranged in a plane below the waist of the spring unit 102 and a second layer of coils arranged in a plane above the waist. It may be noted that not all materials may allow such compression without fracturing, but the geometry may nevertheless be configured so as not to be a limiting factor in this regard.

In a particular example in which the design of Figure 1A to C is formed using 0.5mm diameter springs 104, each spring unit 102 having a height of 5mm, wherein the triangular sides of the spring unit 102 have a dimension of 5mm, and the flexible structure 100 is formed of two layers of spring units 102 using PA11, then the structure 100 may be compressible in a vertical direction to have a dimension of around 5mm in total, i.e., the flexible structure 100 may be compressed to around half its uncompressed height. In an example of such a structure 100, a measured rigidity was found to be around 5 N/mm using a 14mm diameter indenter.

In this example, the flexible structure 100 may be characterised by a solid density of approximately 12%. In other words, approximately 12% of the volume taken up by the structure 100 comprises solid material, with the remaining 88% being taken up by air. In examples, flexible structures formed of additive manufacturing materials (for example, PA11 or PA12) may for example comprise a solid density of less than around 25%, or less than around 20%, in order to provide a high degree of flexibility.

Moreover, in this example, the structure 100 is generated with a frame 114, which provides stability to the edge portions of the structure. However, such a frame may not be provided in all examples.

The physical properties of an object generated in additive manufacturing may depend on the type of build material used and the type of solidification mechanism. In addition, the physical properties may also be affected by processing parameters used in the additive manufacturing process, such as temperature or the type and quantity of agents used. For example, if a higher density of fusing agent is deposited within a feature of an object during generation, the feature may absorb more heat and reach higher temperatures for a longer time, resulting in increased fusing of build material at that location, which may be referred to as "overmelt", relative to a location with a lower density of fusing agent. Therefore, applying a higher density of fusing agent to some features can increase rigidity and decrease flexibility. Conversely, a lower density of fusing agent may result in a feature having a relatively high flexibility.

As will be appreciated, the springs described herein could be characterised as features having a relatively small cross section and a relatively long length, for example comprising wire-, filament- and/or bristle-like elements. The physical properties of such features in additive manufacturing, especially when they are of a small size, may be more susceptible to influence by varying the density of fusing agent than larger features. For example, a relatively small change in fusing agent density in a small feature may result in a relatively substantial change in physical properties, whereas a similar change in fusing agent for other, larger, features may not have any perceptible impact on the physical properties of that feature. For example, in the case where the physical property is flexibility, a large feature may be relatively rigid due to its larger size, whereas smaller features (including in particular wire-like features) may be relatively flexible, and varying the fusing agent density (without making any changes to the composition of the fusing agent itself) can affect how flexible they are. Strategies for controlling the application of fusing agent are discussed in greater detail below.

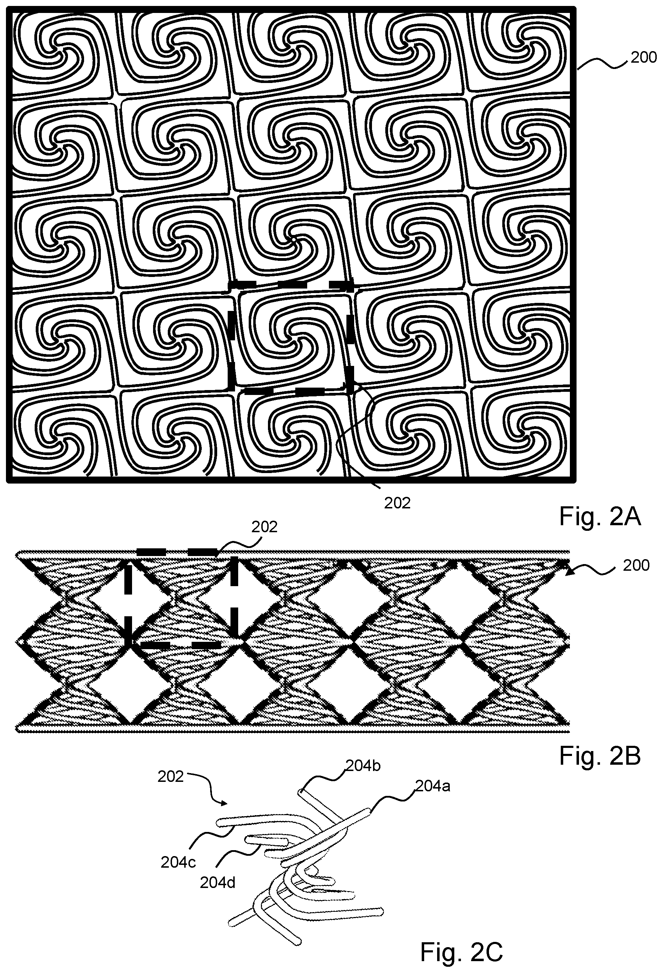

Figure 2A-C show a different design of a flexible structure 200, comprising generally cuboid spring units 202 laid out in a regular rectangular grid. In common with the flexible structure 100, the flexible structure 200 in this example is formed of two layers of interlinked (adjoining) spring units 202, each spring unit 202 comprising four springs (or spring elements) 204a-d which coil around a central axis. Although in this example, the axis is central to all the springs 204, this may not be the case in all examples. In this example, each spring unit 202 (other than the edge spring units 202) is linked to three other spring units by each spring 204 thereof. In other words, each end of each spring 204 (other than those at the edge of the structure 200) is formed continuously with three other springs 204 of adjoining spring units 202. In this example the upper end of a particular spring 204 connects to different spring units 204 than the lower end of that spring 204.

In some examples, the number of turns within a spring may be described in terms of part revolutions, or part turns, wherein a full turn would result in the ends of the spring being in vertical alignment. In some examples, the number of part turns may be an integer number of the reciprocal of the number of springs in a unit. For example, in this case, where there are four springs, each spring 204 may have an integer number of quarter turns to result in a spring unit 202 which can connect to other spring units 202. In the example of Figure 1, as there are three springs 104, there may be an integer number of 1/3 turns. In practice, the maximum number of turns may be limited by the minimum separation between the springs 204 which allows them to be formed separately from one another. In an example as set out herein, five quarter turns may be a practical maximum. In addition, as the number of turns increase, this may increase the possibility that the springs interfere with one another in compression.

In a particular example, such a flexible structure 200 may be manufactured using PA11 to have a 7% solid density, each spring unit having dimensions of 5x5x5mm. The diameter of the 'wire' making up each spring element 204 may be around 0.4mm. Such a structure 200, formed of two layers of spring units 202, may be readily compressible to a minimum thickness of 2 mm. It may be noted that, compared to the example given above, in which the solid density was around 12%, there may be expected to be a greater compressibility associated with this structure, which has a lower solid material density. Indeed, in an example of such a structure 200, a measured rigidity was found to be around 1 N/mm using a 14mm diameter indenter. This compares with the 5 N/mm of the flexible structure 100 described in relation to Figure 1 and as discussed above.

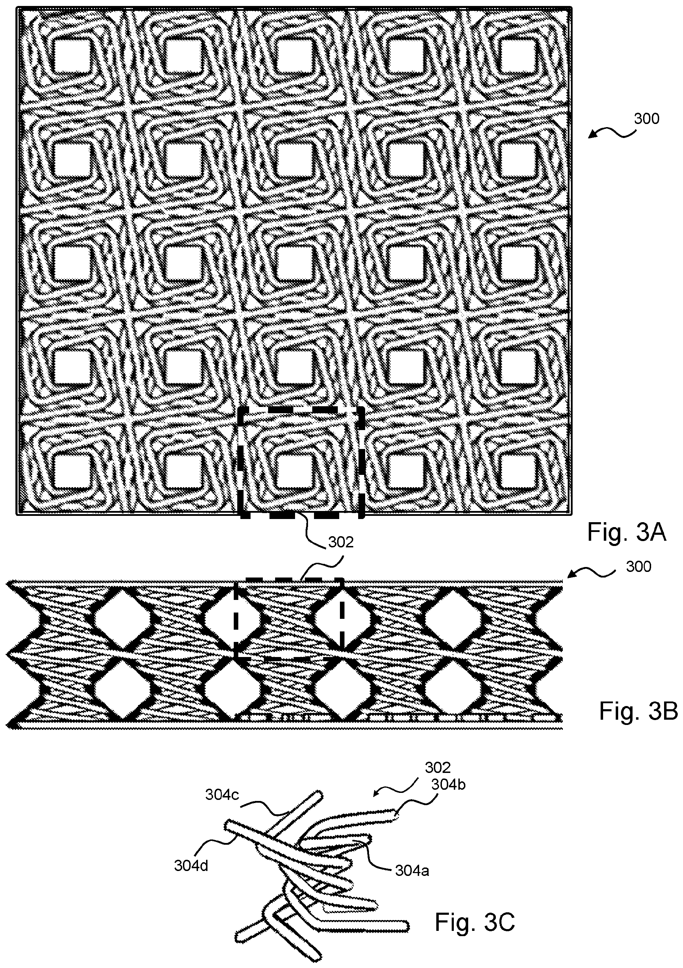

Figure 3A-C show a different design of another flexible structure 300, comprising a generally cuboid spring unit 302. In common with the flexible structures 100, 200, the flexible structure 300 in this example is formed of two layers of interlinked, adjoining, spring units 302, each spring unit 302 comprising four springs (or spring elements) 304a-d. In this example, each spring unit 302 (other than the edge spring units 302) is linked to three other spring units by each spring 304 thereof. In other words, each end of each spring 304 (other than those at the edge of the structure 300) is formed continuously with three other springs 304 of adjoining spring units 302. Although in this example, a common central axis is central to all the springs 304, this may not be the case in all examples.

In a particular example, such a flexible structure 300 may be manufactured using PA11 to have a 9.6% solid density, each spring unit 302 having dimensions of 5x5x5mm. The diameter of each spring 304 may be around 0.5mm. Such a structure 300, formed of two layers of spring units 302, may be readily compressible to a minimum thickness of 3mm. When compared to the structure 200 of Figure 2, the greater solid density may reduce the flexibility, or compressibility of the fabric. In an example of such a structure 300, a measured rigidity was found to be around 2 N/mm using a 14 mm diameter indenter.

While three examples of flexible structures 100, 200, 300 have been discussed above, there are many other variations which may be considered. In particular, variables such as the size of a spring unit 102, 202, 302, the diameter of an element providing a spring 104, 204, 304, the pitch of the springs 104, 204, 304, the number of (partial) turns in a spring 104, 204, 304, solid density, taper angle, length of each spring 104, 204, 304 etc. may be altered, for example in order to provide predetermined attributes such as a specific flexibility and/or in order to provide a flexible structure 100, 200, 300 having any or any combination of predetermined dimensions, compressibility, rigidity or the like. While examples with three or four springs have been discussed above, other designs are possible. For example, spring units comprising five or six springs may be possible in some examples. Moreover, while in the examples above, the spring units 102, 202, 302 were the same as one another, in other examples more than one type of spring unit 102, 202, 302 may be used in a structure 100, 200, 300. Moreover, while in the examples above, the springs 104, 204, 304 of a given spring unit 102, 202, 302 were the same as one another, in other examples more than one type of spring 104, 204, 304 may be used in a given spring unit 102, 202, 302 of a structure 100, 200, 300.

In some examples, flexible structures as set out herein may be generated using additive manufacturing techniques. The additive manufacturing technique may comprise applying print agents (for example fusing agents and/or detailing agents) to layers of a powdered build material. In some examples, the resolution with which the print agent may be applied may be at least 600dpi, or at least 1200dpi. This may allow small structures to be formed.

In some examples, flexible structures as set out herein may be generated such that the spring units have a height, width and depth of 1cm or less, or of 8mm or less. For example, the height, width and depth dimensions may be between around 3 and 10mm, or between around 3 and 6mm. Each individual spring may, for example, comprise a 'wire' of diameter of less than around 2mm, or less than around 1mm, for example between around 0.3 to 1mm. The springs 104 may be separated from one another with a minimum clearance of less than around 1mm, or less than around 0.6mm, and in some examples with a minimum separation along their length of around 0.4mm. Such small-scale structures have many practical uses and may be generated using additive manufacturing methods such as the use of powder and print agent systems wherein the resolution with which the print agent may be applied may be at least 600dpi, or at least 1200dpi.

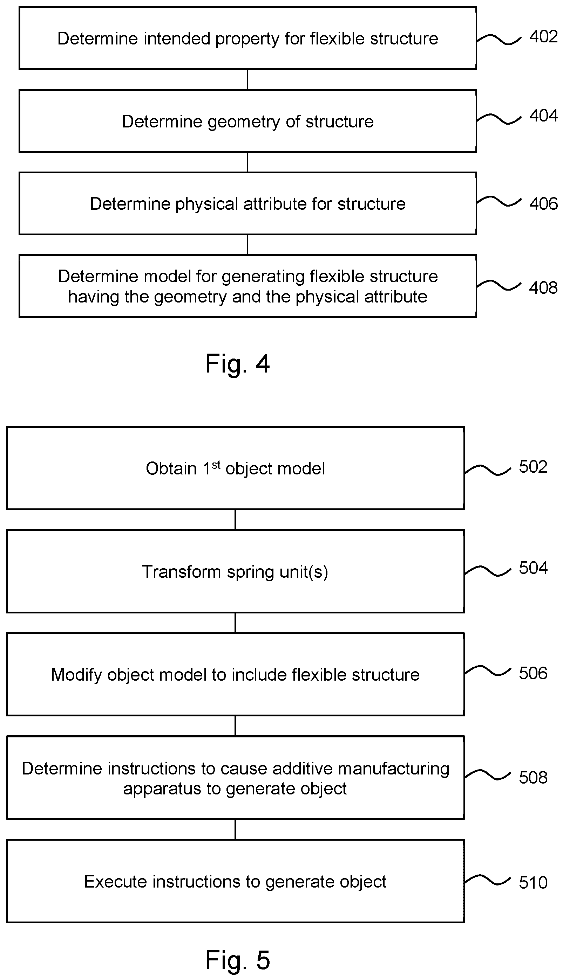

Figure 4 is an example of a method, which may comprise a computer implemented method for designing a flexible structure/flexible fabric, such as those described above.

The method comprises, in block 402, determining, by processing circuitry, an intended property for a flexible structure to be formed by additive manufacturing. The flexible structure comprises a plurality of interlinked spring units, each spring unit comprising at least three coiled springs formed about a common axis and formed of spring filaments (i.e., wire like elements as described above), for example comprising a flexible structure as described above, for example in relation to any of Figure 1A-C, 2A-C and 3A-C. The intended property comprises at least one of a volume (e.g., dimensions and the like) of the structure and a flexibility of the structure. For example, determining the intended property may comprise receiving a specification of an intended property from a user or in design data.

Block 404 comprises determining, by processing circuitry, a geometry of the structure.

For example, this may comprise selecting or determining a spring unit geometry. The spring unit geometry may be defined by, as is set out in greater detail below, any or any combination of: a number of springs; a pitch of the spring and/or a taper angle of the spring, number of turns, diameter of the wire or wire-like element, or filament, forming the spring, diameter of the spring, length of spring or the like. In some examples, these may be associated with a selected material of manufacture, for example PA11, PA12 or the like. This may for example define a center line (or midline or medial axis) of the springs of a spring unit, and how the springs are to be formed to spiral about one another about the common axis (which may be a central axis to all the springs of a spring unit in one example).

For example, selecting a number of springs in a spring unit may comprise selecting whether the spring unit is to be formed to comprise three springs, having a triangular form, such as the triangular spring unit 102 of Figure 1, or four springs, having a rectangular form such as the spring unit 202 of Figure 2 or the spring unit 302 of Figure 3. While examples with three or four springs have been discussed above, other designs are possible. For example, spring units comprising five or six springs may be possible in some examples. Moreover, while in the examples above, the spring units were the same as one another, in other examples more than one type of spring unit may be used in a structure and/or more than one type of spring may be used in a spring unit.

Alternatively or additionally, selecting a geometry of the structure may comprise selecting a spring unit geometry defining how the coils within each spring are formed, for example the number of part turns. In some examples, the number of part turns may be an integer number of the reciprocal of the number of springs in a unit. For example, where there are four springs in a spring unit, the number of turns may be an integer number of quarter turns, and where there are three springs in a spring unit, the number of turns may be an integer number of 1/3 turns.

As noted above, determining the geometry of the structure may comprise selecting the pitch of the spring (i.e., the spacing of the coils of the spring) and/or a taper parameter. In some examples, the taper parameter may comprise a taper angle of 0°, i.e., the springs comprise straight sided springs, but in other examples, a taper parameter may provide a tapering or waisted structure, for example by reference to a non-zero and/or varying taper angle.

In some examples, flexible structures as set out herein may be generated such that the spring units have a height, width and depth of 1cm or less, or of 8mm or less. For example, the height, width and depth dimensions may be between around 3 and 10mm, or between around 3 and 6mm. Each individual spring may, for example, comprise a 'wire' of diameter of less than around 2mm, or less than around 1mm, for example between around 0.3 to 1mm. The springs may be separated from one another with a minimum clearance of less than around 1mm, or less than around 0.6mm, and in some examples with a minimum separation along their length of around 0.4mm. Such small-scale structures have many practical uses and may be generated using additive manufacturing methods such as the use of powder and print agent systems wherein the resolution with which the print agent may be applied may be at least 600dpi, or at least 1200dpi. The print agent may for example comprise a fusing agent and/or a detailing agent.

The vertical spacing of the turns may be specified using a pitch angle. A circular helix i.e., (straight sided) spring unit of radius a and having a pitch $2\pi b$ is described by the parametrisation: $x(t) = a\cos(t)$, $y(t) = a\sin(t)$, $z(t) = b(t)$, where the spring 'grows' in the z direction.

A tapering or waisted spring, where indicated, may be defined so as to provide equally spaced coils using the equation $r = a\theta$, in which r is the length of the radius from the centre of the spiral, a is a constant and $\theta$ is the angular position of the radius in radians. In some examples, a may be selected such that the radius grows by at least the diameter of the element forming the spiral with each full turn, such that the spirals may, at least so long as the material allows it, fully compress into a plane. The spring diameter may also be defined as set out below. In some examples, a maximum value of r may be stated, or the intended dimension(s) of the spring unit may be defined in some other way, such as an intended height, length and width.

In order to provide waisted springs as shown in Figures 1C, 2C and 3C, two similarly designed spirals may be defined, one the inverse of the other. In other examples, spirals may be defined in some other way, for example to provide coils which become further apart from one another (e.g., a logarithmic spiral) or closer together.

In some examples, spring unit geometries or other geometric parameters may be stored in a database, for example as spring unit models. For example, the height of the spring units may be selectable and/or the models may be scalable. In some examples, spring unit geometries or other geometric parameters may be stored in association with data indicative of properties or property ranges and a suitable spring unit design, or subset of designs/geometries may be selected automatically based on the intended property.

For example, a theoretical prediction of the rigidity (or conversely the flexibility) of a structure may be determined mathematically. For example, an equation to predict the rigidity of a spring is:

$$K = \frac{G \cdot d^4}{8 \cdot D^3 \cdot N_a}$$

Where G = Shear modulus for the spring element

    D = diameter of the coil
    d = diameter of the spring filament, and
    $N_a$ = number of coils in the spring

Moreover, in some examples, determining a geometry of the structure may comprise specifying a regular grid layout for the spring units, and/or specifying the number of layers of spring units in the structure. For example a regular grid layout may comprise a repeating pattern of a spring unit, or a group of spring units.

Block 406 comprises determining, by processing circuitry, a physical attribute for the structure based on the intended property, the physical attribute comprising at least one of a size of the spring unit and the diameter of a spring filament.

For example, the diameter of the spring filament (i.e., a filament or element providing a spring 104, 204, 304 as described above) may be selected in order to provide an intended flexibility property. In another example, a size of a spring unit may be selected in order to provide an intended flexibility property, and/or to allow the structure to fit within a predetermined volume.

Block 408 comprises determining, by processing circuitry, a model for use in generating the flexible structure having the geometry and the physical attribute in additive manufacturing. For example, this may comprise determining a mesh model, a vector model, a voxel model or some other model of the flexible structure. The flexible structure may be intended, when generated, to have the specified property.

The model may be provided as object model data which represents at least a portion of the structure to be generated by an additive manufacturing apparatus. Such object model data may for example comprise a Computer Aided Design (CAD) model, and/or may for example be a STereoLithographic (STL) data file, a 3D Manufacturing Format (3MF) file or the like. In some examples, the model may comprise a single spring unit, which may be replicated to form the flexible structure.

In some examples, blocks 404 and 406 may be combined and/or reversed in determining such models. For example, a spring filament diameter (which may for example be less than 1mm, and in some examples is between about 0.3 and 0.6mm) and/or external dimensions of the spring unit (e.g., the height, width and/or depth, which may be less than 1cm, and in some examples is around 5mm) may be determined and used to populate a database of spring unit models having different spring unit geometries, which may be selected from a database by a user in block 404, for example as a spring unit model. In other examples, spring unit models may be models of a 'skeleton', midline or medial axis of the springs of the spring units, and the models may be, at least in part, configurable, for example with selectable spring filament diameters and/or spring unit dimensions. Such spring unit models may be combined to provide the model of the structure. In some examples, instructions to cause an additive manufacturing apparatus to generate the object may be generated based on the model, and the structure may be generated therefrom for example as set out in greater detail below.

Figure 5 is an example of a method of designing and generating an object having incorporated therein a flexible structure.

Block 502 comprises obtaining a first object model comprising a void. For example, the object model may comprise a data model (e.g., a CAD model, a mesh model, a voxel model or the like) of an object which is intended to include both rigid and flexible structures. For example, the object may comprise an insole for a shoe, which may be intended to comprise a relatively rigid form having a flexible portion thereof, for example comprising a flexible structure in a region corresponding to the position of a wearer's metatarsal bones, or extending entirely over a substantially rigid base plate. In another example, the structure may for example comprise an insert for a chair or the like. In a further example, the structure may comprise a portion to be incorporated in packaging, for example to provide protection around a fragile element of a product to be transported, whereas other portions thereof may be packaged in more rigid material.

Block 504 comprises carrying out a geometrical transformation on (e.g., scaling and/or deforming) at least one model of a spring unit of a predetermined flexible structure (which in this example is a structure determined by the process of Figure 4). This may provide a geometric shape for the structure which fills the predetermined void.

For example, scaling a model of a spring unit may comprise determining the major dimensions of the void and determining a suitable dimension for a spring unit such that an integer number of spring units substantially fills the void. This may for example be determined with constraints, such as for example a maximum and minimum dimension of a spring unit.

Deforming a spring unit may comprise carrying out a geometric transformation in at least a part thereof i.e., the model of a spring unit may be stretched or compressed in a region thereof. For example, while spring units of a structure as shown in Figure 2A-C and 3A-C could be exactly enclosed in a cuboid, with an end of a spring arranged in each of the eight corners (which could be described as a cuboid bounding box), a deformation could be applied such that the bounding box formed some other trapezoidal prism.

In examples in which the predetermined flexible structure is represented by a single defined spring unit, or by fewer spring units than would fill the void, the spring unit(s) may be tiled or replicated to provide a structure having a suitable size.

Block 506 comprises modifying the first object model to comprise the structure in the region of the void. In some examples, there may be an interfacing region such that the void is completely filled. In some examples, the interfacing region may comprise solid portions. In some examples, the interfacing region may comprise spring units which are 'deformed', i.e., the model of a spring unit may be stretched or compressed in a region thereof as described above.

This provides a modified object model for generating an object having a flexible structure incorporated therein, the object model comprising the flexible structure data model.

Block 508 comprises determining additive manufacturing instructions based on the data model, which when executed by an additive manufacturing apparatus, cause the additive manufacturing apparatus to generate the structure. In some examples, determining the additive manufacturing instructions based on the data model comprises determining the instructions based on a predetermined mapping between the model data and print agents (e.g., print agent amounts). In some examples, the mapping may be different for a solid region of the modified object model than for the region comprising the flexible structure.

For example, the mapping between the model data and print agents for the region corresponding to the flexible structure may be a specific mapping for generating flexible structures and/or for generating small scale structures.

As noted above, the flexibility of a feature may be affected by processing parameters used in the additive manufacturing process, such as temperature or the type and quantity of agents used. For example, applying a higher density of fusing agent to some features can increase rigidity and decrease flexibility. Conversely, a lower density of fusing agent may result in a feature having a relatively high flexibility. Therefore, in some examples, a mapping for use in generating flexible structures may specify the application of a lower density of fusing agent to form the springs and spring units of the flexible structure than a mapping for generating other (e.g., substantially rigid) portions of the object. In some examples the density of fusing agent may be referred to as an area coverage (for example, x drops per cm$^2$).

Moreover, in this example, the springs are to be close to one another. Detailing agent which cools the build material may be used between regions to be solidified to control the extent of the fusing. Therefore, in some examples, a mapping for use in generating flexible structures may specify the application of a higher density of detailing agent around the springs and spring units of the flexible structure than a mapping for generating other portions of the object (e.g., object portions having greater separations from adjacent portions). Such principles may also apply when generating instructions based on the model determined in the method of Figure 4.

The additive manufacturing instructions may comprise instructions to specify an amount of agent, such as print agent, fusing agent or detailing agent, to be applied to each of a plurality of locations on a layer of build material. For example, determining print instructions may comprise determining 'slices' of a virtual fabrication chamber containing at least one virtual object comprising a flexible structure in a region thereof, and rasterising these slices into pixels. For example, an amount of print agent (or no print agent) may be associated with each of the pixels in order to provide, on average, a print agent density based on mapping(s) as described above. In some examples, halftoning may be applied to determine where to place print agent. In general, if a pixel of a slice relates to a region of a fabrication chamber which is intended to be solidified, the print instructions may be determined to specify that fusing agent should be applied to a corresponding region of build material in object generation. If however a pixel relates to a region of the fabrication chamber which is intended to remain unsolidified, then print instructions may be determined to specify that no agent, or a detailing agent, may be applied thereto. In addition, the amounts of such agents may be specified in the print instructions.

In some examples, other additive manufacturing parameters, such as any, or any combination of heating temperatures, build material choices, an intent of the print mode (e.g., prototype, or final product), and the like, may be specified in the instructions.

The method further comprises, in block 510, executing the instructions to generate the object in a plurality of layers (which may correspond to respective slices of an object model) by selectively solidifying portions of layers of build material using additive manufacturing apparatus. For example, this may comprise forming a layer of build material, applying print agents, for example through use of 'inkjet' liquid distribution technologies in locations specified in object model data for an object model slice corresponding to that layer using at least one print agent applicator, and applying energy, for example heat, to the layer. Some techniques allow for accurate placement of print agent on a build material, for example by using printheads operated according to inkjet principles of two-dimensional printing to apply print agents, which in some examples may be controlled to apply print agents with a resolution of around or at least 600dpi, or 1200dpi. A further layer of build material may then be formed, and the process repeated, for example with the object model data for the next slice.

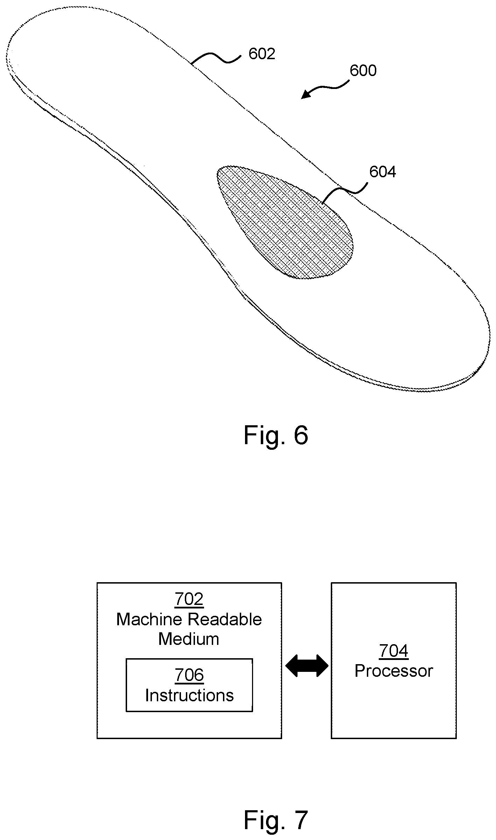

Figure 6 shows an example of a generated object 600 comprising a rigid portion 602 and a flexible structure 604 arranged in a void in the rigid portion 602. The flexible structure 604 may have any of the features of a flexible structure described above, and may for example comprise any of the features of the flexible structures 100, 200, 300 described in relation to Figures 1A-C, 2A-C and 3A-C, and/or be formed based on the method set out in Figure 4 and/or Figure 5. The object may be formed in a layer-wise manner in a single build operation such that the rigid portion 602 and the flexible structure 604 may be formed at the same time, where these lie in a common slice of the object model, and therefore a common layer in the additive manufacturing process.

Figure 7 shows a machine readable medium 702 associated with a processor 704. The machine readable medium 702 comprises instructions 706 which, when executed by the processor 704, cause the processor 704 to carry out tasks.

The machine readable medium 702 may include instructions which, when executed by the processor 704, cause the processor 704 to carry out any or any combination of the blocks of Figure 4 or Figure 5.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts of the method, devices and systems according to examples of the present disclosure. Although the flow diagrams described above show a specific order of execution, the order of execution may differ from that which is depicted. Blocks described in relation to one flow chart may be combined with those of another flow chart. It shall be understood that each block in the flow charts, as well as combinations of the blocks in the flow charts can be realized by machine readable instructions.

The machine-readable instructions may, for example, be executed by a general purpose computer, a special purpose computer, an embedded processor or processors of other programmable data processing devices to realize the functions described in the description and diagrams. In particular, a processor or processing apparatus may execute the machine-readable instructions. Thus, functional modules may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the scope of the present disclosure. It is intended, therefore, that the method, apparatus and related aspects be limited only by the scope of the following claims and their equivalents. It should be noted that the above-mentioned examples illustrate rather than limit what is described herein, and that those skilled in the art will be able to design many alternative implementations without departing from the scope of the appended claims.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

**Claims**

1. A flexible structure (100, 200, 300, 604) comprising a plurality of interlinked spring units (102, 202, 302), each spring unit (102, 202, 302) comprising at least three coaxial coiled springs (104, 204, 304), wherein each coaxial coiled spring (104, 204, 304) of a spring unit (102, 202, 302) comprises a first end and second end, and wherein the first end or the second end of one coaxial coiled spring (104, 204, 304) adjoins the first end or the second end of a coaxial coiled spring (104, 204, 304) of an adjacent spring unit (102, 202, 302).

2. The flexible structure (100, 200, 300, 604) of claim 1, wherein the spring units (102, 202, 302) are waisted.

3. The flexible structure (100, 200, 300, 604) of claim 1, comprising four coaxial coiled springs (104, 204, 304).

4. The flexible structure (100, 200, 300, 604) of claim 1, wherein each spring unit (102, 202, 302) comprises an integer number of springs (104, 204, 304), and, for spring units (102, 202, 302) which are not at an edge of the structure (100, 200, 300, 604), each spring (104, 204, 304) is connected to at least the same integer number of springs of other spring units (102, 202, 302).

5. The flexible structure (100, 200, 300, 604) of claim 1, which is formed by additive manufacturing.

6. The flexible structure (100, 200, 300, 604) of claim 1 in which each spring unit (102, 202, 302) has a height, width and depth dimension of less than 1 cm.

7. The flexible structure (100, 200, 300, 604) of claim 1 in which each spring (104, 204, 304) comprises a coiled wire-like element of less than 1mm, and wherein the springs (104, 204, 304) of are separated from one another with a clearance of less than 1mm.

8. The flexible structure (100, 200, 300, 604) of claim 1,

   wherein the flexible structure (100, 200, 300, 604) is a flexible fabric formed by additive manufacturing,
   wherein each spring is a spiral spring element extending from a lower end (106) to an upper end (108) around a central axis, and the upper end (108) is the first end and the lower end (106) is the second end; and
   wherein the upper end (108) of a first spring element of a first spring unit (102, 202, 302), of said spring units (102, 202, 302), is continuously formed with the upper end (108) of a spring element of a second spring unit (102, 202, 302), of said spring units (102, 202, 302), and the lower end (106) of the first spring element is continuously formed with the lower end (106) of a spring element of a third spring unit (102, 202, 302).

9. The flexible fabric of claim 8, wherein the spring units (102, 202, 302) are arranged in a regular grid.

10. A method comprising:

   determining, by processing circuitry, an intended property for a flexible structure (100, 200, 300, 604) to be formed by additive manufacturing, the flexible structure (100, 200, 300, 604) comprising a plurality of interlinked spring units (102, 202, 302), each spring unit (102, 202, 302) comprising at least three coaxial coiled springs (104) formed of spring filaments and the intended property comprising at least one of a volume of the structure and a flexibility of the structure;
   determining, by processing circuitry, a geometry of the structure,
   determining, by processing circuitry, a physical attribute for the structure based on the intended property, the physical attribute comprising at least one of a size of the spring unit (102, 202, 302) and the diameter of the spring filament; and
   determining, by processing circuitry, a flexible structure (100, 200, 300, 604) data model for use in generating the flexible structure (100, 200, 300, 604) having the geometry and the physical attribute in said additive manufacturing.

11. A method according to claim 10 wherein determining the geometry of the structure comprises determining a spring unit (102, 202, 302) geometry, wherein determining a spring unit (102, 202, 302) geometry comprises determining at least one of:

a number of springs (104, 204, 304) in a spring unit (102, 202, 302);

a spring (104, 204, 304) pitch;

a spring (104, 204, 304) length;

a number of partial turns of a spring (104, 204, 304); and

a taper angle.

12. A method according to claim 10 further comprising: determining an object model for generating an object having a flexible structure (100, 200, 300, 604) incorporated therein, the object model comprising the flexible structure (100, 200, 300, 604) data model.

13. A method according to claim 12 comprising:

obtaining a first object model comprising a void;
transforming and/or replicating at least one spring unit (102, 202, 302) to provide a geometric shape for the structure which corresponds to the predetermined void;
modifying the first object model to comprise the structure in the region of the void.

14. A method according to claim 10 further comprising

determining additive manufacturing instructions based on the data model, which when executed by an additive manufacturing apparatus, cause the additive manufacturing apparatus to generate the structure;
wherein determining the additive manufacturing instructions comprises determining the instructions based on a predetermined mapping between the model data and print agents, wherein the predetermined mapping is a mapping for generating flexible structures (100, 200, 300, 604).

15. A method according to claim 14 further comprising executing the instructions to generate the object.

**Patentansprüche**

1. Flexible Struktur (100, 200, 300, 604), die eine Vielzahl von miteinander verbundenen Federeinheiten (102, 202, 302) umfasst, wobei jede Federeinheit (102, 202, 302) mindestens drei koaxiale Spiralfedern (104, 204, 304) umfasst, wobei jede koaxiale Spiralfeder (104, 204, 304) einer Federeinheit (102, 202, 302) ein erstes Ende und ein zweites Ende umfasst und wobei das erste Ende oder das zweite Ende einer koaxialen Spiralfeder (104, 204, 304) an das erste Ende oder das zweite Ende einer koaxialen Spiralfeder (104, 204, 304) einer benachbarten Federeinheit (102, 202, 302) grenzt.

2. Flexible Struktur (100, 200, 300, 604) nach Anspruch 1, wobei die Federeinheiten (102, 202, 302) tailliert sind.

3. Flexible Struktur (100, 200, 300, 604) nach Anspruch 1, die vier koaxiale Spiralfedern (104, 204, 304) umfasst.

4. Flexible Struktur (100, 200, 300, 604) nach Anspruch 1, wobei jede Federeinheit (102, 202, 302) eine ganzzahlige Anzahl an Federn (104, 204, 304) umfasst und bei Federeinheiten (102, 202, 302), die sich nicht an einem Rand der Struktur (100, 200, 300, 604) befinden, jede Feder (104, 204, 304) mit mindestens der gleichen ganzzahligen Anzahl an Federn anderer Federeinheiten (102, 202, 302) verbunden ist.

5. Flexible Struktur (100, 200, 300, 604) nach Anspruch 1, die durch additive Fertigung gebildet wird.

6. Flexible Struktur (100, 200, 300, 604) nach Anspruch 1, bei der jede Federeinheit (102, 202, 302) eine Höhen-, eine Breiten- und eine Tiefenabmessung von weniger als 1 cm aufweist.

7. Flexible Struktur (100, 200, 300, 604) nach Anspruch 1, bei der jede Feder (104, 204, 304) ein gewickeltes drahtartiges Element von weniger als 1 mm umfasst und wobei die Federn (104, 204, 304) durch einen Abstand von weniger als 1 mm voneinander getrennt sind.

8. Flexible Struktur (100, 200, 300, 604) nach Anspruch 1,

wobei die flexible Struktur (100, 200, 300, 604) ein flexibles Gewebe ist, welches durch additive Fertigung gebildet wird,
wobei es sich bei jeder Feder um ein Spiralfederelement handelt, das sich von einem unteren Ende (106) zu einem oberen Ende (108) um eine Mittelachse erstreckt, und das obere Ende (108) das erste Ende ist und das untere Ende (106) das zweite Ende ist und
wobei das obere Ende (108) eines ersten Federelements einer ersten Federeinheit (102, 202, 302) der Federeinheiten (102, 202, 302) durchgängig mit dem oberen Ende (108) eines Federelements einer zweiten Federeinheit (102, 202, 302) der Federeinheiten (102, 202, 302) ausgebildet ist und das untere Ende (106) des ersten Federelements durchgängig mit dem unteren Ende (106) eines Federelements einer dritten Federeinheit (102, 202, 302) ausgebildet ist.

9. Flexibles Gewebe nach Anspruch 8, wobei die Federeinheiten (102, 202, 302) in einem regelmäßigen Raster angeordnet sind.

10. Verfahren, das umfasst:

Bestimmen einer beabsichtigten Eigenschaft für eine flexible Struktur (100, 200, 300, 604), die durch additive Fertigung gebildet werden soll, durch eine Verarbeitungsschaltung, wobei die flexible Struktur (100, 200, 300, 604) eine Vielzahl von miteinander verbundenen Federeinheiten (102, 202, 302) umfasst, wobei jede Federeinheit (102, 202, 302) mindestens drei koaxiale Spiralfedern (104) umfasst, die aus Federdrähten ausgebildet sind, und die beabsichtigte Eigenschaft mindestens eines aus einem Volumen der Struktur und einer Flexibilität der Struktur umfasst;
Bestimmen einer Geometrie der Struktur durch eine Verarbeitungsschaltung,
Bestimmen eines physikalischen Attributs für die Struktur auf der Grundlage der beabsichtigten Eigenschaft durch eine Verarbeitungsschaltung, wobei das physikalische Attribut mindestens eines aus einer Größe der Federeinheit (102, 202, 302) und dem Durchmesser des Federdrahtes umfasst; und
Bestimmen eines Datenmodells der flexiblen Struktur (100, 200, 300, 604) durch eine Verarbeitungsschaltung zur Verwendung beim Erzeugen der flexiblen Struktur (100, 200, 300, 604) mit der Geometrie und dem physikalischen Attribut bei der additiven Fertigung.

11. Verfahren nach Anspruch 10, wobei das Bestimmen der Geometrie der Struktur Bestimmen einer Geometrie einer Federeinheit (102, 202, 302) umfasst, wobei das Bestimmen einer Geometrie einer Federeinheit (102, 202, 302) Bestimmen von mindestens einem aus Folgendem umfasst:

einer Anzahl an Federn (104, 204, 304) in einer Federeinheit (102, 202, 302);
eines Abstands der Federn (104, 204, 304);
einer Länge der Federn (104, 204, 304);
einer Anzahl an Teilwindungen einer Feder (104, 204, 304) und
einem Kegelwinkel.

12. Verfahren nach Anspruch 10, ferner umfassend: Bestimmen eines Objektmodells zum Erzeugen eines Objekts mit einer darin integrierten flexiblen Struktur (100, 200, 300, 604), wobei das Objektmodell das Datenmodell der flexiblen Struktur (100, 200, 300, 604) umfasst.

13. Verfahren nach Anspruch 12, umfassend:

Erhalten eines ersten Objektmodells, das einen Hohlraum umfasst;
Umwandeln und/oder Replizieren mindestens einer Federeinheit (102, 202, 302), um eine geometrische Form für die Struktur bereitzustellen, welche dem vorbestimmten Hohlraum entspricht;
Modifizieren des ersten Objektmodells, sodass es die Struktur im Bereich des Hohlraums umfasst.

14. Verfahren nach Anspruch 10, ferner umfassend

Bestimmen von Anweisungen zur additiven Fertigung auf Grundlage des Datenmodells, die, wenn sie von einer Vorrichtung zur additiven Fertigung ausgeführt werden, bewirken, dass die Vorrichtung zur additiven Fertigung die Struktur erzeugt;
wobei das Bestimmen der Anweisungen zur additiven Fertigung Bestimmen der Anweisungen auf Grundlage einer vorbestimmten Zuordnung zwischen den Modelldaten und Druckagenten umfasst, wobei die vorbestimmte Zuordnung eine Zuordnung zum Erzeugen von flexiblen Strukturen (100, 200, 300, 604) ist.

15. Verfahren nach Anspruch 14, das ferner Ausführen der Anweisungen zum Erzeugen des Objekts umfasst.

## Revendications

1. Structure flexible (100, 200, 300, 604) comprenant une pluralité d'unités de ressort (102, 202, 302) reliées entre elles, chaque unité de ressort (102, 202, 302) comprenant au moins trois ressorts enroulés coaxiaux (104, 204, 304), dans laquelle chaque ressort enroulé coaxial (104, 204, 304) d'une unité de ressort (102, 202, 302) comprend une première extrémité et une seconde extrémité, et dans laquelle la première extrémité ou la seconde extrémité d'un ressort enroulé coaxial (104, 204, 304) est adjacente à la première extrémité ou à la seconde extrémité d'un ressort enroulé coaxial (104, 204, 304) d'une unité de ressort (102, 202, 302) adjacente.

2. Structure flexible (100, 200, 300, 604) selon la revendication 1, dans laquelle les unités de ressort (102, 202, 302) sont en forme de diabolo.

3. Structure flexible (100, 200, 300, 604) selon la revendication 1, comprenant quatre ressorts enroulés coaxiaux (104, 204, 304).

4. Structure flexible (100, 200, 300, 604) selon la revendication 1, dans laquelle chaque unité de ressort (102, 202, 302) comprend un nombre entier de ressorts (104, 204, 304), et, pour les unités de ressort (102, 202, 302) qui ne sont pas au niveau d'un bord de la structure (100, 200, 300, 604), chaque ressort (104, 204, 304) est relié à au moins le même nombre entier de ressorts d'autres unités de ressort (102, 202, 302).

5. Structure flexible (100, 200, 300, 604) selon la revendication 1, qui est formée par fabrication additive.

6. Structure flexible (100, 200, 300, 604) selon la revendication 1 dans laquelle chaque unité de ressort (102, 202, 302) a une dimension de hauteur, largeur et profondeur inférieure à 1 cm.

7. Structure flexible (100, 200, 300, 604) selon la revendication 1 dans laquelle chaque ressort (104, 204, 304) comprend un élément de type fil enroulé de moins de 1 mm, et dans laquelle les ressorts (104, 204, 304) sont séparés l'un de l'autre par un jeu de moins de 1 mm.

8. Structure flexible (100, 200, 300, 604) selon la revendication 1,

dans laquelle la structure flexible (100, 200, 300, 604) est un tissu flexible formé par fabrication additive,
dans laquelle chaque ressort est un élément ressort en spirale s'étendant d'une extrémité inférieure (106) à une extrémité supérieure (108) autour d'un axe central, et l'extrémité supérieure (108) est la première extrémité et l'extrémité inférieure (106) est la seconde extrémité ; et
dans laquelle l'extrémité supérieure (108) d'un premier élément ressort d'une première unité de ressort (102, 202, 302), desdites unités de ressort (102, 202, 302), est formée en continu avec l'extrémité supérieure (108) d'un élément ressort d'une deuxième unité de ressort (102, 202, 302), desdites unités de ressort (102, 202, 302), et l'extrémité inférieure (106) du premier élément ressort est formée en continu avec l'extrémité inférieure (106) d'un élément ressort d'une troisième unité de ressort (102, 202, 302).

9. Tissu flexible selon la revendication 8, dans lequel les unités de ressort (102, 202, 302) sont agencées en une grille régulière.

10. Procédé comprenant :

la détermination, au moyen d'un ensemble de circuits de traitement, d'une propriété prévue pour une structure flexible (100, 200, 300, 604) à former par fabrication additive, la structure flexible (100, 200, 300, 604) comprenant une pluralité d'unités de ressort (102, 202, 302) reliées entre elles, chaque unité de ressort (102, 202, 302) comprenant au moins trois ressorts enroulés coaxiaux (104) formés de filaments de ressort et la propriété prévue comprenant au moins l'un d'un volume de la structure et d'une flexibilité de la structure ;
la détermination, par l'ensemble de circuits de traitement, d'une géométrie de la structure,
la détermination, par l'ensemble de circuits de traitement, d'un attribut physique pour la structure en fonction de la propriété prévue, l'attribut physique comprenant au moins l'un d'une taille de l'unité de ressort (102, 202, 302) et du diamètre du filament de ressort ; et
la détermination, par l'ensemble de circuits de traitement, d'un modèle de données de structure flexible (100, 200, 300, 604) à utiliser pour générer la structure flexible (100, 200, 300, 604) ayant la géométrie et l'attribut physique dans ladite fabrication additive.

11. Procédé selon la revendication 10, dans lequel la détermination de la géométrie de la structure comprend la détermination de la géométrie d'une unité de ressort (102, 202, 302), dans lequel la détermination de la géométrie d'une unité de ressort (102, 202, 302) comprend la détermination d'au moins l'un de :

un nombre de ressorts (104, 204, 304) dans une unité de ressort (102, 202, 302) ;
un pas de ressort (104, 204, 304) ;
une longueur de ressort (104, 204, 304) ;
un nombre de tours partiels d'un ressort (104, 204, 304) ; et
un angle d'inclinaison.

12. Procédé selon la revendication 10, comprenant en outre :
la détermination d'un modèle d'objet pour générer un objet ayant une structure flexible (100, 200, 300, 604) incorporée dans celui-ci, le modèle d'objet comprenant le modèle de données de structure flexible (100, 200, 300, 604).

13. Procédé selon la revendication 12, comprenant :

l'obtention d'un premier modèle d'objet comprenant un vide ;
la transformation et/ou la reproduction d'au moins une unité de ressort (102, 202, 302) pour donner à la structure une forme géométrique qui correspond au vide prédéterminé ;
la modification du premier modèle d'objet pour qu'il comprenne la structure dans la région du vide.

**EP 4 380 783 B1**

**14.** Procédé selon la revendication 10, comprenant en outre

> la détermination d'instructions de fabrication additive en fonction du modèle de données, qui, lorsqu'elles sont exécutées par un appareil de fabrication additive, amènent l'appareil de fabrication additive à générer la structure ; dans lequel la détermination des instructions de fabrication additive comprend la détermination des instructions en fonction d'une correspondance prédéterminée entre les données du modèle et des agents d'impression, dans lequel la correspondance prédéterminée est une correspondance pour la génération de structures flexibles (100, 200, 300, 604).

**15.** Procédé selon la revendication 14, comprenant en outre l'exécution des instructions pour générer l'objet.

Fig. 1A

Fig. 1B

Fig. 1C

Fig. 2A

Fig. 2B

Fig. 2C

Fig. 3A

Fig. 3B

Fig. 3C

| |
|---|
| Determine intended property for flexible structure — 402 |
| Determine geometry of structure — 404 |
| Determine physical attribute for structure — 406 |
| Determine model for generating flexible structure having the geometry and the physical attribute — 408 |

## Fig. 4

| |
|---|
| Obtain 1st object model — 502 |
| Transform spring unit(s) — 504 |
| Modify object model to include flexible structure — 506 |
| Determine instructions to cause additive manufacturing apparatus to generate object — 508 |
| Execute instructions to generate object — 510 |

## Fig. 5

Fig. 6

| 702 Machine Readable Medium | 704 Processor |
|---|---|
| 706 Instructions | |

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180368518 A1